# EUROPEAN PATENT APPLICATION

(11) **EP 4 550 526 A1**
(43) Date of publication of application: **07.05.2025**
(21) Application number: 23845661.0
(22) Date of filing: 27.07.2023
(51) Int. Cl.: H01M 10/613, H01M 10/615

(54) **HEAT EXCHANGE PLATE, BATTERY PACK AND VEHICLE**

(30) Priority: 29.07.2022 CN 202210911342; 31.10.2022 CN 202211352187
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); HUANG, Wei, Shenzhen, Guangdong 518118 (CN); MA, Rui, Shenzhen, Guangdong 518118 (CN); QUE, Yansheng, Shenzhen, Guangdong 518118 (CN)
(74) Representative: Taor, Simon Edward William
(86) International application number: PCT/CN2023/109655
(87) International publication number: WO 2024/022456

(57) **Abstract**

A heat exchange plate, a battery pack and a vehicle. The heat exchange plate comprises a first interface, a second interface, and a flow channel in communication with the first interface and the second interface. The heat exchange plate is configured to exchange heat for a battery, and the flow channel is configured to circle a working medium. When the heat exchange plate is used to cool the battery, the working medium flows into the flow channel from the first interface, and flows out from the second interface. When the heat exchange plate is used to heat the battery, the working medium flows into the flow channel from the second interface, and flows out from the first interface.

## Description

### CROSS-REFERENCE TO RELATED APPLICATIONS

The present disclosure claims priority to and benefits of Chinese Patent Application No. 202210911342.3 filed on July 29, 2022 and Chinese Patent Application No. 202211352187.2 filed on October 31, 2022. The entire content of the above-referenced applications is incorporated herein by reference.

### FIELD

The present disclosure belongs to the technical field of battery components, and specifically, relates to a heat exchange plate, a battery pack, and a vehicle.

### BACKGROUND

As people become more aware of environmental protection, more and more electric vehicles have appeared. As core power components in electric vehicles, batteries are critical for long-term and stable operation of electric vehicles.

In the existing technology, water passes through a harmonica tube to cool or heat a battery. However, a water flow can enter the harmonica tube only from a fixed inlet and is discharged from a fixed outlet, that is, the harmonica tube uses a same water flow direction during a heating or cooling operation. As a result, heat exchange components such as the harmonica tube can easily cause temperatures of some parts of a battery to be excessively high or low, reducing the stability and service life of the battery.

### SUMMARY

One objective of the present disclosure is to provide new technical solutions of a heat exchange plate, a battery pack, and a vehicle, which can solve the problem of low heat exchange efficiency of a traditional heat exchange plate.

According to a first aspect of the present disclosure, a heat exchange plate is provided, applied to a battery, including: a first terminal, a second terminal, and a flow channel connecting the first terminal to the second terminal. The heat exchange plate is configured to exchange heat for the battery, and the flow channel is configured to allow a working medium to flow. When the heat exchange plate is configured to cool the battery, the working medium flows into the flow channel from the first terminal and flows out from the second terminal. When the heat exchange plate is configured to heat the battery, the working medium flows into the flow channel from the second terminal and flows out from the first terminal.

Optionally, when the heat exchange plate is configured to cool the battery, the working medium flows in from the first terminal and preferentially flows through a first-type region; and when the heat exchange plate is configured to heat the battery, the working medium flows in from the second terminal and preferentially flows through a second-type region.

The first-type region is arranged in correspondence with a post region of the battery, and the second-type region is arranged in correspondence with a non-post region of the battery.

Optionally, the flow channel includes a first section of flow channel connected to the first terminal and a second section of flow channel connected to the second terminal.

When the heat exchange plate is configured to cool the battery, the working medium flows in from the first terminal, flows through the first section of flow channel and the second section of flow channel successively, and then flows out from the second terminal. In the first section of flow channel, a length of the flow channel flowing through the first-type region is greater than a length of the flow channel flowing through the second-type region. In the second section of flow channel, the length of the flow channel flowing through the first-type region is less than the length of the flow channel flowing through the second-type region.

When the heat exchange plate is configured to heat the battery, the working medium flows in from the second terminal, flows through the second section of flow channel and the first section of flow channel successively, and then flows out from the first terminal. In the second section of flow channel, a length of the flow channel flowing through the first-type region is less than a length of the flow channel flowing through the second-type region. In the first section of flow channel, the length of the flow channel flowing through the first-type region is greater than the length of the flow channel flowing through the second-type region.

Optionally, a ratio of a length of the first section of flow channel to a length of the second section of flow channel ranges from 0.5 to 5.

Optionally, a ratio of a width of the second-type region to a width of the first-type region ranges from 1 to 8.

Optionally, a ratio of the width of the first-type region to a length of the battery ranges from 0.1 to 0.4, and a ratio of the width of the second-type region to the length of the battery ranges from 0.1 to 0.6.

Optionally, the first terminal and the second terminal are located on a same side of the heat exchange plate.

Optionally, the heat exchange plate includes an inlet and outlet assembly, and the first terminal and the second terminal are located in the inlet and outlet assembly.

Optionally, the heat exchange plate includes the first-type region and the second-type region, and the flow channel is distributed in the first-type region and the second-type region. The first-type region includes a first partition and a second partition; the second-type region includes a first partition region, and the first partition region is located between the first partition and the second partition. When the heat exchange plate is configured to exchange heat for the battery, the working medium circles in the first partition, the first partition region, and the second partition at least once. The first-type region is arranged in correspondence with a post region of the battery, and the second-type region is arranged in correspondence with a non-post region of the battery.

Optionally, the first-type region includes a fourth sub-region; and the second-type region includes a second partition region. When the heat exchange plate is configured to cool the battery, the working medium flows through the fourth sub-region, the second partition region, and the fourth sub-region from the first terminal, and flows into the second terminal from the fourth sub-region. When the heat exchange plate is configured to heat the battery, the working medium flows through the fourth sub-region, the second partition region, and the fourth sub-region from the second terminal, and flows into the first terminal from the fourth sub-region.

Optionally, the first-type region includes a fourth sub-region and a second sub-region; the second-type region includes a second partition region, and the second partition region is located between the fourth sub-region and the second sub-region.

When the heat exchange plate is configured to cool the battery, the working medium flows into the fourth sub-region, the second partition region, and the second sub-region from the first terminal, flows back to the second partition region and the fourth sub-region from the second sub-region, and then flows into the second terminal. When the heat exchange plate is configured to heat the battery, the working medium flows into the fourth sub-region, the second partition region, and the second sub-region from the second terminal, flows back to the second partition region and the fourth sub-region from the second sub-region, and then flows into the first terminal.

Optionally, the heat exchange plate includes a first heat exchange module and a second heat exchange module, and both the first heat exchange module and the second heat exchange module include the first-type region and the second-type region. The first-type region includes a third sub-region, a first sub-region, a fourth sub-region, and a second sub-region; and the second-type region includes a first partition region and a second partition region. The first partition region is located between the third sub-region and the first sub-region, the second partition region is located between the fourth sub-region and the second sub-region, and the first sub-region and the fourth sub-region are arranged adjacent to each other.

Optionally, in the first heat exchange module, when the heat exchange plate is configured to exchange heat for the battery, the working medium circles in the flow channel of the third sub-region, the first partition region, and the first sub-region at least once.

Optionally, in the second heat exchange module, when the heat exchange plate is configured to cool the battery, the working medium flows into the first heat exchange module from the first terminal, flows into the fourth sub-region and the second sub-region from the first heat exchange module, flows into the second partition region from the fourth sub-region and the second sub-region, and then flows into the second terminal. When the heat exchange plate is configured to heat the battery, the working medium flows into the second partition region from the second terminal, flows into the fourth sub-region and the second sub-region from the second partition region, and then flows into the first terminal.

Optionally, the flow channel includes a flow diverging junction, the flow diverging junction includes a first-stage flow diverging junction, at least one first-stage flow diverging junction is arranged in the first-type region, the first-stage flow diverging junction is arranged close to the first terminal or the second terminal, and the flow diverging junction diverges the flow channel.

Optionally, the heat exchange plate includes a first heat exchange module and a second heat exchange module, and both the first heat exchange module and the second heat exchange module include the first-type region. The first-type region of the first heat exchange module includes a third sub-region and a first sub-region, and the first-type region of the second heat exchange module includes a fourth sub-region and a second sub-region. The first-stage flow diverging junction is arranged in the third sub-region, the flow diverging junction further includes a second-stage flow diverging junction, and the second-stage flow diverging junction is located in at least one of the first sub-region, the second sub-region, and the fourth sub-region.

Optionally, the heat exchange plate includes: a heat exchange region and a battery region, the heat exchange region is arranged around the battery region, the battery region is a battery projection region of a battery on the heat exchange plate, and the flow channel includes a first-type flow channel and a second-type flow channel. The first-type flow channel is located in the heat exchange region, and the second-type flow channel is distributed in the battery region.

Optionally, a length of the first-type flow channel is less than a length of the second-type flow channel, and/or a number of diverging times of the first-type flow channel is less than a number of diverging times of the second-type flow channel.

According to a second aspect of the present disclosure, a battery pack is provided, including the heat exchange plate according to the first aspect.

According to a third aspect of the present disclosure, a vehicle is provided, including the heat exchange plate according to the first aspect, or
including the battery pack according to the second aspect.

A technical effect of the present disclosure is as follows:

The embodiments of the present disclosure provide a heat exchange plate. The heat exchange plate can improve the heat exchange efficiency of the heat exchange plate through heat exchange between the working medium and the battery. Besides, when the heat exchange plate is configured to cool or heat the battery, a flow direction of the working medium in the flow channel can be flexibly switched, so that a region heated first when the heat exchange plate heats the battery is different from a region cooled first when the heat exchange plate cools the battery, which improves temperature evenness of heat exchange of the heat exchange plate.

Other features and advantages of the present disclosure will become apparent from the following detailed description of exemplary embodiments of the present disclosure with reference to the accompanying drawings.

### BRIEF DESCRIPTION OF THE DRAWINGS

Accompanying drawings are incorporated into and constitute a part of this specification, show embodiments that conform to the present disclosure, and are used together with this specification to describe the principle of the present disclosure.
FIG. 1 is a schematic diagram of splitting a battery pack according to an embodiment of the present disclosure;
FIG. 2 is a top view of a battery pack according to an embodiment of the present disclosure;
FIG. 3 is a first schematic diagram of a flow direction (a) of a flow channel and a partition (b) of a heat exchange plate according to an embodiment of the present disclosure;
FIG. 4 is a second schematic diagram of a flow direction (a) of a flow channel and a partition (b) of a heat exchange plate according to an embodiment of the present disclosure;
FIG. 5 is a first schematic diagram of a heat exchange plate according to an embodiment of the present disclosure;
FIG. 6 is a second schematic diagram of a heat exchange plate according to an embodiment of the present disclosure;
FIG. 7 is a first schematic diagram of a flow direction of a flow channel of a heat exchange plate according to an embodiment of the present disclosure;
FIG. 8 is a second schematic diagram of a flow direction of a flow channel of a heat exchange plate according to an embodiment of the present disclosure;
FIG. 9 is a schematic diagram of a direction change junction of a heat exchange plate according to an embodiment of the present disclosure;
FIG. 10 is a schematic diagram of a flow diverging/converging junction of a heat exchange plate according to an embodiment of the present disclosure;
FIG. 11 is a schematic diagram of partitioning a heat exchange plate according to an embodiment of the present disclosure;
FIG. 12 is a first schematic diagram of a battery pack according to an embodiment of the present disclosure;
FIG. 13 is a third schematic diagram of a heat exchange plate according to an embodiment of the present disclosure;
FIG. 14 is an enlarged view of a part A in FIG. 13;
FIG. 15 is a fourth schematic diagram of a heat exchange plate according to an embodiment of the present disclosure;
FIG. 16 is a schematic diagram of a first heat exchange module of a heat exchange plate according to an embodiment of the present disclosure;
FIG. 17 is a schematic diagram of a second heat exchange module of a heat exchange plate according to an embodiment of the present disclosure;
FIG. 18 is a schematic diagram of partitioning a heat exchange plate according to an embodiment of the present disclosure; and
FIG. 19 is a schematic diagram of a base plate and a flow channel plate.

In the accompanying drawings:
1. Battery core; 11. First battery module; 12. Second battery module;
2. Heat exchange plate; 21. Flow channel;
211. Direction change junction; 2111. First-type direction change junction; 2112. Second-type direction change junction;
212. Flow diverging junction; 2121. First-stage flow diverging junction; 2122. Second-stage flow diverging junction;
22. Inlet and outlet assembly; 221. First terminal; 222. Second terminal; 26. First-type region; 261. First partition; 2611. First sub-region; 2612. Second sub-region; 262. Second partition; 2621. Third sub-region; 2622. Fourth sub-region; 27. Second-type region; 271. First partition region; 272. Second partition region;
100. Trunk circulation flow channel; 200. Second circulation flow channel; 300. Third circulation flow channel; 400. Fourth circulation flow channel;
201. First heat exchange module; and 202. Second heat exchange module.

### DETAILED DESCRIPTION

Various exemplary embodiments of the present disclosure are now be described in detail with reference to the accompanying drawings. It should be noted: unless otherwise specified, opposite arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but where appropriate, the technologies, the methods, and the devices should be considered as a part of the specification.

**In** all examples shown and discussed herein, any specific value should be construed as merely exemplary and not as limitations. Therefore, other examples of exemplary embodiments may have different values.

It should be noted: similar reference numerals and letters refer to similar items in the following accompanying drawings. Therefore, once an item is defined in one accompanying drawing, the item does not need to be further discussed in subsequent accompanying drawings.

This technical solution provides a heat exchange plate that can be used on electric vehicles, and the heat exchange plate can provide good heat exchange effect for the battery. When the battery needs to be heated, heat exchange agent with heat can be transferred to various regions of the battery through a flow channel to assist in heating the battery. When the battery needs to be cooled, the flow channel can be used reversely, so that heat exchange agent with a low temperature is reversely transferred to various regions of the battery through the flow channel to assist in cooling the battery.

The heat exchange plate provided by this technical solution is designed to provide stable heat exchange performance for batteries of new-energy electric vehicles and provide a better temperature environment for the batteries.

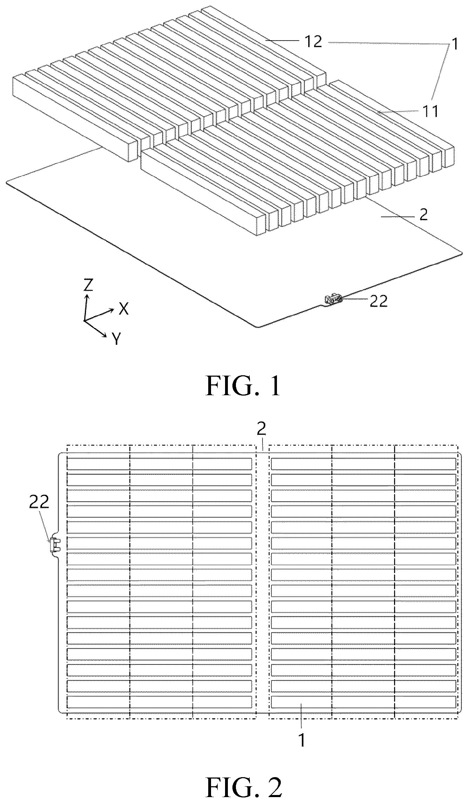

Referring to FIG. 1 to FIG. 15, the embodiments of the present disclosure provide a heat exchange plate, applied to a battery. The heat exchange plate includes:
a first terminal 221, a second terminal 222, and a flow channel 21 connecting the first terminal 221 to the second terminal 222.

The heat exchange plate 2 is configured to exchange heat for the battery, and the flow channel is configured to allow a working medium to flow. The working medium can be a refrigerant such as R123a and R32, and CO₂ or water.

When the heat exchange plate 2 is configured to cool the battery, for example, when the heat exchange plate 2 can cool the battery through a low-temperature working medium, the working medium flows into the flow channel 21 from the first terminal 221 and flows out from the second terminal 222. Through phase change of the working medium and heat exchange with the battery, the battery can be effectively cooled.

When the heat exchange plate 2 is configured to heat the battery, for example, when the heat exchange plate 2 heats the battery through a high-temperature working medium, the working medium flows into the flow channel 21 from the second terminal 222 and flows out from the first terminal 221. Through phase change of the working medium and heat exchange with the battery, the battery can be effectively heated. This improves the heat exchange effect of the heat exchange plate 2 for the battery and ensures the long-term and stable operation of the battery.

The heat exchange plate provided in the embodiments of the present disclosure can improve the heat exchange efficiency of the heat exchange plate 2 through phase change of the working medium and heat exchange with the battery. Besides, when the heat exchange plate 2 is configured to cool or heat the battery, a region heated first when the heat exchange plate heats the battery is different from a region cooled first when the heat exchange plate cools the battery, which improves temperature evenness of heat exchange of the heat exchange plate.

In addition, the flow channel 21 may be stamped in the heat exchange plate 2, and the battery may include multiple cells. The heat exchange plate 2 cools the battery in a forward direction (a flow direction of the working medium in the flow channel) and heats the battery in a reverse direction (a flow direction of the working medium in the flow channel), which can improve the cooling and heating effect of the battery, ensure the temperature evenness of the battery, and improve the heat exchange capability of the heat exchange plate 2 for the battery.

The heat exchange plate 2 can be switched to two states: a cooling mode and a heating mode. In these two states, the heat exchange plate or a pump device causes the working medium to flow in opposite directions, thereby achieving the purpose of preferentially performing heat exchange on a region.

Optionally,
when the heat exchange plate 2 is configured to cool the battery, the working medium flows in from the first terminal 221 and preferentially flows through a first-type region; and
when the heat exchange plate 2 is configured to heat the battery, the working medium flows in from the second terminal 222 and preferentially flows through a second-type region.

The first-type region 26 is arranged in correspondence with a post region of the battery, and the second-type region 27 is arranged in correspondence with a non-post region of the battery.

Specifically, when the heat exchange plate 2 is configured to exchange heat for the battery, the first-type region 26 may correspond to a region where a battery core generates higher heat in the battery, and the second-type region 27 may correspond to a region where the battery core generates lower heat in the battery. Since the battery core needs to be provided with a post for electrical connection, heat generated in the post region (a region near the post) of the battery core during operation is higher, thus forming the post region of the battery. The region of the body of the battery core generates lower heat, thus forming the non-post region of the battery. The first-type region 26 can be arranged in correspondence with the post region of the battery, and the second-type region 27 can be arranged in correspondence with a non-post region of the body of the battery core on the battery, to improve the heat exchange efficiency of the heat exchange plate 2.

When the heat exchange plate 2 is configured to cool the battery, the overall temperature of the battery is relatively high, and the working medium can be a low-temperature refrigerant. The low-temperature working medium flows in from the first terminal 221, and then preferentially flows through the first-type region. In this way, the low-temperature working medium can be used to preferentially cool the post region of the battery that generates higher heat on the battery, to improve the efficiency of heat exchange between the heat exchange plate and the post region of the battery. Then, the working medium in the flow channel flows through the second-type region to cool the non-post region of the battery that generates lower heat on the battery, to ensure the heat exchange balance of the heat exchange plate for the battery and maintain the temperature evenness of the battery during operation.

Specifically, when the heat exchange plate 2 is configured to cool the battery, that the working medium preferentially flows through the first-type region may be: a length of the flow channel of the working medium flowing through the first-type region is greater than a length of the flow channel of the working medium flowing through the second-type region, or may be: a flow amount of the working medium flowing through the first-type region is greater than a flow amount of the working medium flowing through the second-type region, so as to ensure that cooling provided by the first-type region to the battery is greater than cooling provided by the second-type region to the battery, so that the temperature of the first-type region is close to the temperature of the second-type region, thereby ensuring temperature evenness of the heat exchange plate.

When the heat exchange plate 2 is configured to heat the battery, the overall temperature of the battery is relatively low, and the working medium can be a high-temperature refrigerant. The high-temperature working medium flows in from the second terminal 222, and then preferentially flows through the second-type region. In this way, the high-temperature working medium can be used to preferentially heat the non-post region of the battery with a lower temperature on the battery, to improve the efficiency of heat exchange between the heat exchange plate and the non-post region of the battery. Then, the working medium in the flow channel flows through the first-type region to heat the post region of the battery with a higher temperature on the battery, to ensure the heat exchange balance of the heat exchange plate for the battery and maintain the temperature evenness of the battery during operation.

Specifically, when the heat exchange plate 2 is configured to heat the battery, that the working medium preferentially flows through the second-type region may be: a length of the flow channel of the working medium flowing through the second-type region is greater than a length of the flow channel of the working medium flowing through the first-type region, or may be: a flow amount of the working medium flowing through the second-type region is greater than a flow amount of the working medium flowing through the first-type region, so as to ensure that heating provided by the second-type region to the battery is greater than heating provided by the first-type region to the battery, so that the temperature of the first-type region is close to the temperature of the second-type region, thereby ensuring temperature evenness of the heat exchange plate.

It is worth noting that the working medium preferentially flowing through the first-type region or the second-type region in the present disclosure does not limit a sequence of flow, and instead corresponds to an amount of heat exchange between the working medium and the battery in the first-type region or the second-type region.

Optionally, the flow channel includes a first section of flow channel connected to the first terminal 221 and a second section of flow channel connected to the second terminal.

When the heat exchange plate 2 is configured to cool the battery, the working medium flows in from the first terminal 221, flows through the first section of flow channel and the second section of flow channel successively, and then flows out from the second terminal, in the first section of flow channel, a length of the flow channel flowing through the first-type region is greater than a length of the flow channel flowing through the second-type region, and in the second section of flow channel, the length of the flow channel flowing through the first-type region is less than the length of the flow channel flowing through the second-type region.

When the heat exchange plate 2 is configured to heat the battery, the working medium flows in from the second terminal 222, flows through the second section of flow channel and the first section of flow channel successively, and then flows out from the first terminal 221, in the second section of flow channel, a length of the flow channel flowing through the first-type region is less than a length of the flow channel flowing through the second-type region, and in the first section of flow channel, the length of the flow channel flowing through the first-type region is greater than the length of the flow channel flowing through the second-type region.

Specifically, when the heat exchange plate 2 is configured to cool the battery, the first section of flow channel can be the front section of the flow channel, and the second section of flow channel can be the rear section of the flow channel. In the first section of flow channel, a length of the flow channel flowing through the first-type region is greater than a length of the flow channel flowing through the second-type region. Therefore, the low-temperature working medium in the first section of flow channel can be used to better exchange heat for the post region of the battery that generates higher heat on the battery. When the working medium flows into the second section of flow channel, the heat exchange efficiency of the working medium decreases. In this case, in the second section of flow channel, the length of the flow channel flowing through the first-type region is less than the length of the flow channel flowing through the second-type region. Therefore, the working medium in the second section of flow channel can be used to exchange heat between the heat exchange plate and the non-post region of the battery that generates lower heat, so as to make full use of the heat exchange efficiency of different stages of flow channels on the heat exchange plate and improve the heat exchange effect of the heat exchange plate.

When the heat exchange plate 2 is configured to heat the battery, the second section of flow channel can be the front section of the flow channel, and the first section of flow channel can be the rear section of the flow channel. In the second section of flow channel, the length of the flow channel flowing through the first-type region is less than the length of the flow channel flowing through the second-type region. Therefore, the high-temperature working medium in the second section of flow channel can be used to better exchange heat for the non-post region of the battery with a lower temperature. When the working medium flows into the first section of flow channel, the heat exchange efficiency of the working medium decreases. In this case, in the first section of flow channel, the length of the flow channel flowing through the first-type region is greater than the length of the flow channel flowing through the second-type region. Therefore, the working medium in the first section of flow channel can be used to exchange heat between the heat exchange plate and the post region of the battery with a relatively low temperature, which can also improve the heat exchange effect of the heat exchange plate.

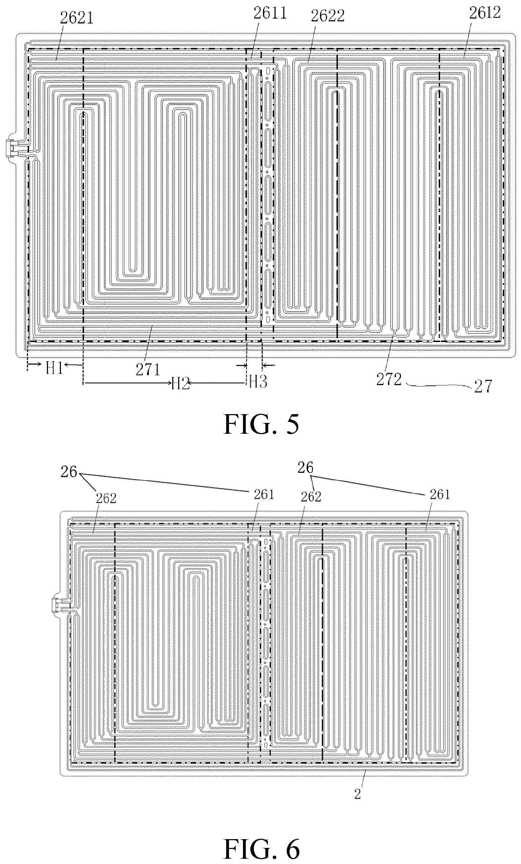

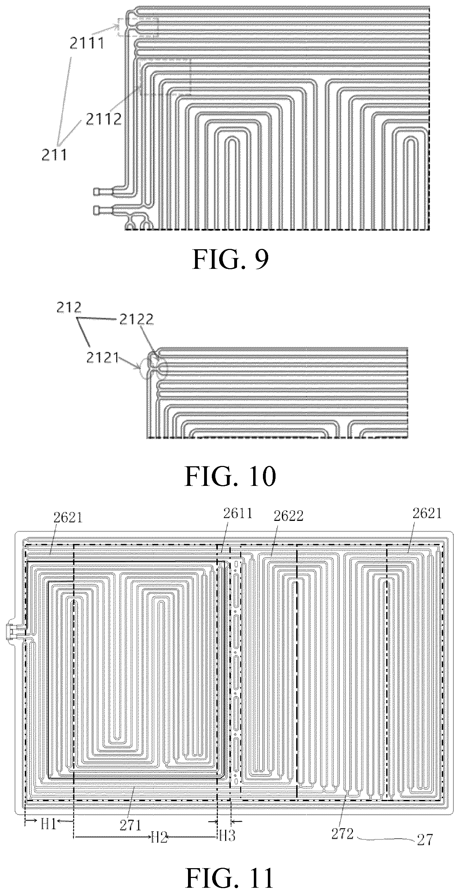

In an embodiment, referring to FIG. 5, the first section of flow channel connected to the first terminal 221 and the second section of flow channel connected to the second terminal 222 form a circular flow channel, an extended region of a black solid line in FIG. 11 can correspond to the first section of flow channel, and a flow channel between the end of the black solid line and the second terminal can correspond to the second section of flow channel. Obviously, the first section of flow channel extends and exchanges heat mainly in the first-type region, while the second section of flow channel extends and exchanges heat mainly in the second-type region.

Optionally, a ratio of a length of the first section of flow channel to a length of the second section of flow channel ranges from 0.5 to 5.

Specifically, the first section of flow channel is mainly configured to implement heat exchange between the heat exchange plate and the post region of the battery, and the second section of flow channel is mainly configured to implement heat exchange between the heat exchange plate and the non-post region of the battery. When the heat exchange plate exchanges heat for the battery with the post region that generates significant heat, the length of the first section of flow channel may be set to be greater than the length of the second section of flow channel. For example, a ratio a of the length of the first section of flow channel to the length of the second section of flow channel is set, where 1<a≤3. For example: a is 1.2, 1.6, 2.0, 2.4, 2.6, or 2.8. Alternatively, a ratio a of the length of the first section of flow channel to the length of the second section of flow channel is set, where 2≤a≤5. For example: a is 2.2, 2.6, 3.0, 3.4, 3.6, 3.8, 4.0, 4.4, 4.6, or 5. Alternatively, a ratio a of the length of the first section of flow channel to the length of the second section of flow channel is set, where 3≤a≤5. For example: a is 3.0, 3.4, 3.6, 3.8, 4.0, 4.4, 4.6, or 5. Alternatively, a ratio a of the length of the first section of flow channel to the length of the second section of flow channel is set, where 1<a≤2. For example: a is 1.2, 1.6, or 2.0. Alternatively, 2≤a≤4. For example: a is 2.2, 2.6, 3.0, 3.4, 3.6, 3.8, or 4.0. In this way, the heat exchange plate can prioritize heat exchange for different regions according to battery heat exchange modes.

Optionally, a ratio of a width of the second-type region to a width of the first-type region ranges from 1 to 8.

Specifically, referring to FIG. 5, the second-type region 27 may include the first partition region 271, the first-type region 26 includes a third sub-region 2621 and a first sub-region 2611, and the first partition region 271 is located between the third sub-region 2621 and the first sub-region 2611. The width of the second-type region may include a width H2 of the first partition region 271, the width of the first-type region may include a width H1 of the third sub-region 2621 and a width H3 of the first sub-region 2611, and the width H1 of the third sub-region 2621 may be the same as or different from the width H3 of the first sub-region 2611.

The first-type region 26 is arranged in correspondence with the post region of the battery, and the second-type region 27 is arranged in correspondence with the non-post region of the battery. The post region of the battery is mainly used to connect the battery core in the battery to external devices, while the non-post region of the battery is mainly used to arrange the battery core. To ensure the capacity of the battery, the non-post region of the battery is larger than the post region of the battery. To implement the correspondence between different regions of the heat exchange plate and the high-temperature region and the low-temperature region of the battery for heat exchange, the width of the second-type region can be set to be greater than the width of the first-type region. For example, the width H2 of the first partition region 271 is greater than the width H1 of the third sub-region 2621 and specifically, a ratio of the width H2 of the first partition region 271 to the width H1 of the third sub-region 2621 may be 2, 3, 4, 5, or 6, and/or the width H2 of the first partition region 271 is greater than the width H3 of the first sub-region 2611 and specifically, a ratio of the width H2 of the first partition region 271 to the width H3 of the first sub-region 2611 may be 4, 5, 6, 7, or 8, so as to improve the heat exchange flexibility of the heat exchange plate for the battery.

Optionally, a ratio of the width of the first-type region to a length of the battery ranges from 0.1 to 0.4, and a ratio of the width of the second-type region to the length of the battery ranges from 0.1 to 0.6.

Specifically, the post of the battery may be located at one end of the battery along a length direction of the battery, or the post of the battery may be located at two ends of the battery along the length direction of the battery. The first-type region 26 is arranged in correspondence with the post region of the battery, and the second-type region 27 is arranged in correspondence with the non-post region of the battery. Therefore, a ratio of the width of the first-type region to the length of the battery corresponds to a ratio of the width of the post region to the length of the battery, and a ratio of the width of the second-type region to the length of the battery corresponds to a ratio of the width of the non-post region to the length of the battery. To increase the size of the non-post region for arranging the battery core while ensuring that the battery is connected to the outside through the post, the ratio of the width of the second-type region to the length of the battery can be set to be greater than the ratio of the width of the first-type region to the length of the battery. For example, the ratio of the width of the first-type region to the length of the battery ranges from 0.1 to 0.4, and the ratio of the width of the second-type region to the length of the battery ranges from 0.1 to 0.6. In addition, for batteries of different sizes, the width of the post region and the width of the non-post region of the battery also change correspondingly. Therefore, the ratio of the width of the first-type region to the length of the battery and the ratio of the width of the second-type region to the length of the battery are also adjusted correspondingly.

In an embodiment, when the heat exchange plate exchanges heat for a battery with a length of 1.2m, a ratio of the width of the first-type region to the length of the battery ranges from 0.05 to 0.3, and a ratio of the width of the second-type region to the length of the battery ranges from 0.2 to 0.6.

In another embodiment, when the heat exchange plate exchanges heat for a battery with a length of 0. 8m, a ratio of the width of the first-type region to the length of the battery ranges from 0.3 to 0.4, and a ratio of the width of the second-type region to the length of the battery ranges from 0.1 to 0.4.

The first-type region can correspond to the high-temperature region of the battery. The high-temperature region of the battery can be a region of the battery where the temperature changes greatly. For example, the high-temperature region is a region of the battery that is 5°C to 10°C higher than a normal operating temperature of the battery. The second-type region can correspond to the low-temperature region of the battery. The low-temperature region of the battery can be a region of the battery where the temperature changes slightly. For example, the low-temperature region is a region of the battery that is 0°C to 5°C higher than the normal operating temperature of the battery.

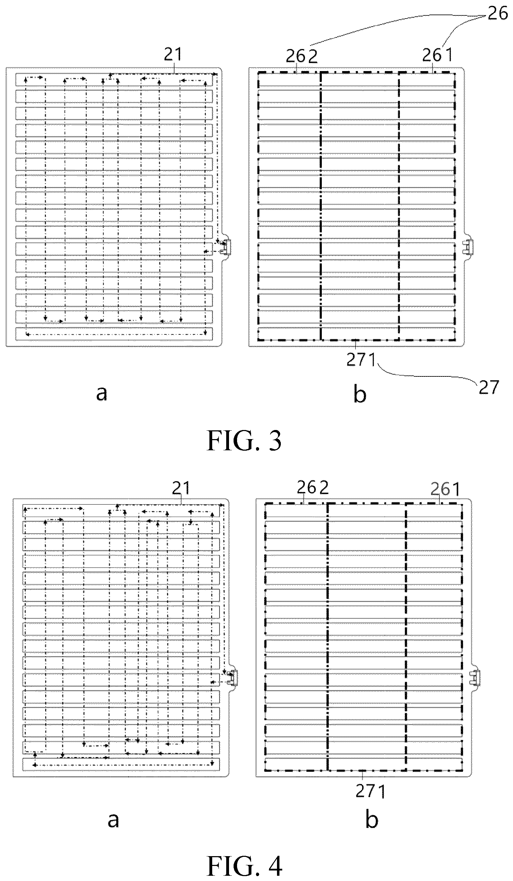

Optionally, referring to FIG. 3 and FIG. 4, the heat exchange plate 2 includes the first-type region 26 and the second-type region 27, and the flow channel 21 is distributed in the first-type region 26 and the second-type region 27.

When the heat exchange plate 2 is configured to exchange heat for the battery, the working medium circles in the first-type region 26 and the second-type region 27 at least once.

When the heat exchange plate 2 is configured to cool the battery, the working medium flows through the first-type region 26 and the second-type region 27 from the first terminal 221, and flows into the second terminal 222 from the second-type region 27.

When the heat exchange plate 2 is configured to heat the battery, the working medium flows through the second-type region 27 and the first-type region 26 from the second terminal 222, and flows into the first terminal 221 from the first-type region 26.

Specifically, when the heat exchange plate 2 is configured to cool the battery through a low-temperature working medium, the working medium flows into the heat exchange plate 2 from the first terminal 221, then flows from a flow channel 21 of the first-type region 26 to a flow channel 21 of the second-type region 27, and finally flows out of the heat exchange plate 2 from the second terminal 222. When the heat exchange plate 2 is configured to heat the battery through a high-temperature working medium, the working medium flows into the heat exchange plate 2 from the second terminal 222, then flows from the flow channel 21 of the second-type region 27 to the flow channel 21 of the first-type region 26, and finally flows out of the heat exchange plate 2 from the first terminal 221, so as to improve the heat exchange effect of the heat exchange plate 2 for the battery and ensure the long-term and stable operation of the battery.

When the heat exchange plate 2 is in the cooling mode, the flow channel 21 is designed in such a way that the working medium can flow from the first-type region 26 to the second-type region 27. That is, the flow channel 21 is designed such that the working medium first flows into the flow channel in the first-type region 26 and then flows into the flow channel in the second-type region 27. In this way, the working medium can first perform heat exchange in the first-type region 26, and the working medium preferentially absorbs the heat generated by the battery corresponding to the first-type region 26, and then the heat exchange capability of the working medium decreases. The working medium then flows to the second-type region 27 to exchange the heat generated by the battery corresponding to this region. Finally, the working medium flows to the second terminal 222 and flows out from the heat exchange plate 2.

On the contrary, when the heat exchange plate 2 is in the heating mode, the flow channel 21 is designed in such a way that the working medium can flow from the second-type region 27 to the first-type region 26. That is, the flow channel is designed such that during reverse flow, the working medium can first flow into the flow channel in the second-type region 27 and then flow into the flow channel in the first-type region 26. The working medium can first exchange heat with the second-type region 27 and dissipate the heat to a space of the battery corresponding to the second-type region 27. Then, the heat exchange capability of the working medium decreases and the working medium flows into the first-type region 26. The working medium dissipates the remaining heat in the first-type region 26 to a space where the battery is located, and then flows back to the first terminal 221 and flows out of the heat exchange plate 2.

To improve the efficiency of heat exchange between the working medium and the battery when the working medium flows in the first-type region 26 and the second-type region 27, the flow channels 21 in the first-type region 26 and the second-type region 27 may be set as circular flow channels. For example, the flow channel 21 changes a direction once or more times in the first-type region 26, or the flow channel 21 changes a direction once or more times in the second-type region 27, or the flow channel 21 can change a direction in both the first-type region 26 and the second-type region 27 to bend to form one or more circular flow channels, so that the working medium circles in the first-type region 26 and the second-type region 27 once or multiple times, thereby improving the heat exchange efficiency of the heat exchange plate 2.

For example, the first-type region 26 and the second-type region 27 are arranged adjacent to each other, the first terminal 221 is arranged close to the first-type region 26, and the second terminal 222 is arranged close to the second-type region 27. When the heat exchange plate 2 is configured to cool the battery, the working medium flows through the first-type region 26 and the second-type region 27 from the first terminal 221. The working medium can bend and change a direction in the first-type region 26 to form a circular flow, or the working medium can bend and change a direction in the second-type region 27 to form a circular flow, and finally flow into the second terminal 222 from the second-type region 27, so that the working medium circles at least once in the first-type region 26 and the second-type region 27.

When the heat exchange plate 2 is configured to heat the battery, the working medium flows through the second-type region 27 and the first-type region 26 from the second terminal 222. The working medium can bend and change a direction in the second-type region 27 to form a circular flow, or the working medium can bend and change a direction in the first-type region 26 to form a circular flow, and finally flow into the first terminal 221 from the first-type region 26, so that the working medium circles at least once in the first-type region 26 and the second-type region 27.

Optionally, at least a part of the flow channel 21 is a curved flow channel.

Specifically, when the working medium flows in the heat exchange plate 2, to make full use of the heat exchange effect of the working medium during phase change and avoid that the working medium straightly flows in and straightly flows out of the flow channel 21, the flow channels 21 in the first-type region 26 and the second-type region 27 can be arranged as curved flow channels. For example, the flow channels 21 in the first-type region 26 and the second-type region 27 can be arranged as circular zigzag flow channels or annular flow channels to increase the length of the flow channel 21 in the heat exchange plate 2, thereby increasing the effective heat exchange area of the heat exchange plate 2 and increasing the heat exchange amount of the heat exchange plate 2 for the battery.

Optionally, referring to FIG. 5, the first terminal 221 and the second terminal 222 are located on the same side of the heat exchange plate 2.

Specifically, a shape of the heat exchange plate 2 can match a shape structure (which can refer to a shape of a large surface of the battery) of the battery. For example, when exchanging heat for a square battery, the heat exchange plate 2 can be set in a square shape, and when exchanging heat for a rhombus-shaped battery, the heat exchange plate 2 can be set in a rhombus shape to ensure desirable heat exchange after the heat exchange plate 2 and the battery are in contact with each other. When the first terminal 221 and the second terminal 222 are located on the same side of the heat exchange plate 2, regardless of whether the working medium enters the heat exchange plate from the first terminal 221 or enters the heat exchange plate 2 from the second terminal 222, the working medium can flow to another side (different from the side where the first terminal 221 and the second terminal 222 are arranged) of the heat exchange plate 2 and the middle region of the heat exchange plate 2. This facilitates the circulating flow of the working medium in the heat exchange plate 2 and improves the heat exchange amount of the heat exchange plate 2 for the battery.

In a specific embodiment, the heat exchange plate 2 is a rectangle that matches the rectangular battery. The first terminal 221 and the second terminal 222 are located on a short side of the heat exchange plate 2 and are close to each other. When entering the heat exchange plate 2 from the first terminal 221 or the second terminal 222, the working medium can flow to two long sides of the heat exchange plate 2, the other short side, and the middle region of the heat exchange plate 2, and finally flow out of the heat exchange plate 2 from the second terminal 222 or the first terminal 221, to form the circulating flow of the working medium in the heat exchange plate 2.

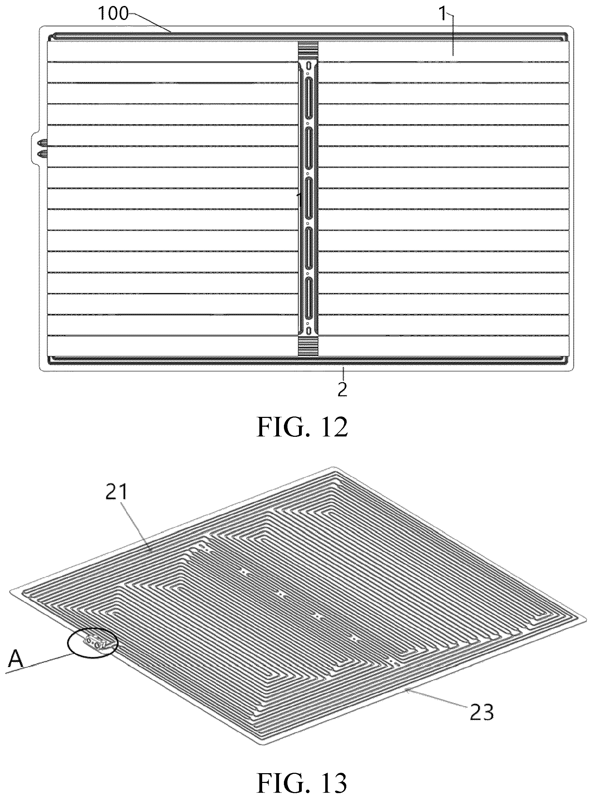

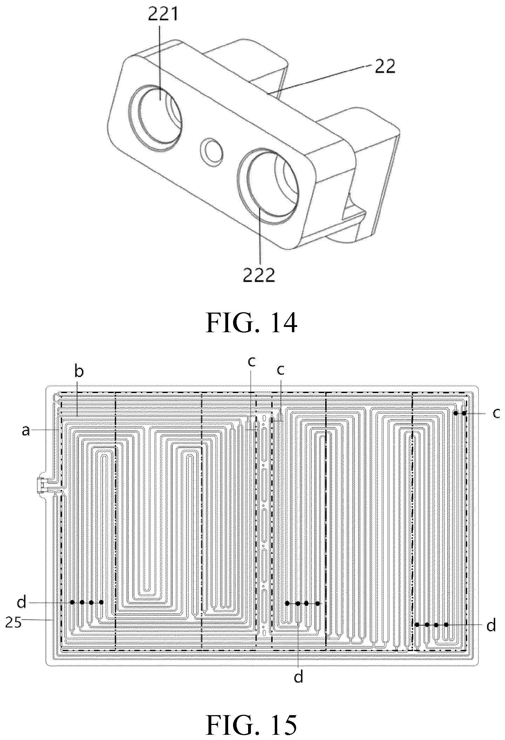

Optionally, referring to FIG. 13 and FIG. 14, the heat exchange plate 2 includes an inlet and outlet assembly 22, and the first terminal 221 and the second terminal 222 are located in the inlet and outlet assembly 22.

Specifically, the inlet and outlet assembly 22 has a first terminal 221 and a second terminal 222, and the first terminal 221 and the second terminal 222 are respectively connected to two ends of the flow channel 21. the first terminal 221 and the second terminal 222 can be configured to connect the heat exchange plate 2 to an external component that provides a working medium. For example, an external pump can be connected to the heat exchange plate 2 through the first terminal 221 and the second terminal 222, to ensure the flow stability of the working medium in the heat exchange plate 2.

Optionally, referring to FIG. 3 and FIG. 4, the heat exchange plate includes the first-type region 26 and the second-type region 27, and the flow channel is distributed in the first-type region 26 and the second-type region 27.

The first-type region 26 includes a first partition 261 and a second partition 262.

The second-type region 27 includes a first partition region 271, and the first partition region 271 is located between the first partition 261 and the second partition 262.

When the heat exchange plate 2 is configured to exchange heat for the battery, the working medium circles in the first partition 261, the first partition region 271, and the second partition 262 at least once.

The first-type region 26 is arranged in correspondence with a post region of the battery, and the second-type region 27 is arranged in correspondence with a non-post region of the battery.

Specifically, to improve the efficiency of heat exchange between the working medium and the battery when the working medium flows in the first partition 261, the first partition region 271, and the second partition 262, the flow channel 21 in the first partition 261, the first partition region 271, and in the second partition 262 can be arranged as a circular flow channel. For example, the flow channel 21 bends to form one or multiple circular flow channels after changing a direction multiple times in the first partition 261, the first partition region 271, and the second partition 262, so that the working medium circles once or multiple times in the first partition 261, the first partition region 271, and the second partition 262, thereby improving the heat exchange efficiency of the heat exchange plate 2.

When the heat exchange plate 2 is configured to exchange heat for the battery, the first-type region 26 corresponds to a region where a battery core generates higher heat in the battery, and the second-type region 27 corresponds to a region where the battery core generates lower heat in the battery. In the implementations shown in FIG. 5 and FIG. 6, the battery cores of the battery can be arranged in two columns side by side. Since posts are usually arranged at two ends of the battery core for electrical connection, the post region at two ends of the battery formed by the battery core generates higher heat, while the middle region of the body of the battery core generates lower heat. The first-type region 26 may be arranged in correspondence with the post region of the two ends of the battery, and the second-type region 27 may be arranged in correspondence with the non-post region in the middle of the battery.

Optionally, the post region of the battery may include a positive electrode position and a negative electrode position, and the positive electrode position and the negative electrode position are respectively located at two ends of the battery, so that the first partition 261 is opposite to the positive electrode position, and the second partition 262 is opposite to the negative electrode position.

**In** an embodiment, when the heat exchange plate 2 cools the battery through the working medium, the working medium flows to the flow channel 21 of the second-type region 27 simultaneously from the flow channels 21 of the first partition 261 and the second partition 262 that are away from each other (in this case, the flow channels 21 of the first partition 261 and the second partition 262 may separately have independent working medium inlets). In this case, the working medium can be a low-temperature working medium. The low-temperature working medium first cools the positive electrode position and the negative electrode position of the battery that generate higher heat, and then cools other regions of the battery, to ensure the temperature evenness of the battery.

When the heat exchange plate 2 heats the battery through the working medium, the working medium flows from the flow channel 21 of the second-type region 27 to the flow channels 21 of the first partition 261 and the second partition 262. In this case, the working medium can be a high-temperature working medium, and the high-temperature working medium first heats regions of the battery that generate lower heat other than the positive electrode position and the negative electrode position, and then heats the positive electrode position and the negative electrode position of the battery, to ensure the temperature evenness of the battery.

In another embodiment, when the heat exchange plate 2 cools the battery through the working medium, the working medium may flow from the flow channel 21 of the first partition 261 to the flow channel 21 of the second partition (in this case, the flow channels 21 of the first partition 261 and the second partition 262 may share one working medium inlet), and flow from the flow channel 21 of the second partition 262 to the flow channel 21 of the second-type region 27.

Specifically, the working medium flowing through the first partition 261 and the second partition 262 all converges into the flow channel 21 of the second-type region 27. When a heat exchange requirement of the first partition 261 is higher than a heat exchange requirement of the second partition 262, the working medium in the first partition 261 can first flow through the second partition 262 and then flow back to the second partition 262, and the working medium in the second partition 262 can flow directly to the flow channel 21 of the second-type region 27, to improve the heat exchange flexibility of the heat exchange plate 2 in the battery.

In an embodiment, a longitudinal region on the left side in FIG. 3 belongs to the second partition 262 of the first-type region 26, a longitudinal region in the middle belongs to the first partition region 271 of the second-type region 27, and a longitudinal region on the right side also belongs to the first partition 261 of the first-type region 26, so that the first-type region 26 corresponds to the region of the battery that generates higher heat, and the second-type region 27 corresponds to the region of the battery that generates lower heat, to ensure the heat exchange amount of the heat exchange plate 2 for the battery.

Moreover, the first terminal 221 and the second terminal 222 are arranged on a side of the first partition 261 away from the second partition 262, so that the working medium can pass through the first partition 261, the first partition region 271, and the second partition 262 in sequence and flow into the heat exchange plate. The first partition 261 and the second partition 262 both belong to the corresponding region of the battery that generates higher heat. Therefore, the first partition 261 and the second partition 262 are interchangeable in structure and function. For example, the first terminal 221 and the second terminal 222 are disposed on a side of the second partition 262 away from the first partition 261, which can also achieve efficient heat exchange of the heat exchange plate 2 for the battery. Moreover, the interchange in the first-type region 26 on two sides of the second-type region 27 can also be applied to a structure of the heat exchange plate 2 formed by multiple groups of first-type regions 26 and second-type regions 27.

In addition, heating of the battery core is usually constant. Regardless of an external environment and whether the battery is in a discharging or charging state, a part of the battery core where posts and electrical connection points are provided is always a region that generates higher heat, as shown in the FIG. 2, and the middle region of the battery core generates moderate heat, that is, a part of the battery core where electrical connection points and posts are not provided is not prone to heat. When heating is required, a region of the battery core without a post is often colder and requires more heat. When cooling is required, a region of the battery core with a post is often hotter and requires better cooling. The advantage of this design is that the flow channel of the heat exchange plate is arranged based on the working characteristic of the battery core in the battery according to different regions of structures that generate different heat. Moreover, working medium flow directions used in the heating mode and the cooling mode are opposite. During heat dissipation, the working medium first flows along the flow channel to a region with higher heat. During heating, the working medium first flows along the flow channel to a region with lower heat. This enables the working medium to maintain high efficiency of heat exchange with the region of the battery that generates higher heat.

When the battery cores of the battery are arranged in other manners, or the battery cores are electrically connected in other manners, positions and numbers of first-type regions 26 and second-type regions 27 are different. This technical solution uses the cases shown in FIG. 3 and FIG. 4 as an example. FIG. 3a and FIG. 4a are schematic diagrams of flow directions of flow channels in the heat exchange plate 2. FIG. 3b and FIG. 4b are schematic diagrams of region division of the heat exchange plate 2. Design characteristics of this part are described. Optionally, referring to FIG. 3,
the first-type region 26 includes a fourth sub-region 2622, and
the second-type region 27 includes a second partition region 272.

When the heat exchange plate 2 is configured to cool the battery, the working medium flows through the fourth sub-region 2622, the second partition region 272, and the fourth sub-region 2622 from the first terminal, and flows into the second terminal from the fourth sub-region 2622.

When the heat exchange plate 2 is configured to heat the battery, the working medium flows through the fourth sub-region 2622, the second partition region 272, and the fourth sub-region 2622 from the second terminal, and flows into the first terminal from the fourth sub-region 2622.

Specifically, the heat exchange plate 2 may include the fourth sub-region 2622 and the second partition region 272 arranged adjacent to each other, and the first terminal 221 and the second terminal 222 may be located on a side of the fourth sub-region 2622 away from the second partition region 272. The heat exchange plate 2 is configured to exchange heat for the battery with a post on a single side.

When the heat exchange plate 2 is configured to cool the battery, the working medium flows through the fourth sub-region 2622, the second partition region 272, and the fourth sub-region 2622 from the first terminal 221. The working medium in the fourth sub-region 2622 can quickly cool the region of the battery that generates higher heat, and then the working medium in the second partition region 272 cools the region of the battery that generates lower heat. Finally, the working medium flows from the fourth sub-region 2622 into the second terminal 222.

When the heat exchange plate 2 is configured to heat the battery, the working medium flows through the fourth sub-region 2622, the second partition region 272, and the fourth sub-region 2622 from the second terminal, and flows into the first terminal from the fourth sub-region 2622.

In addition, the first terminal 221 and the second terminal 222 can also be located on the fourth sub-region 2622 and the second partition region 272 respectively, so that when the heat exchange plate 2 is configured to cool the battery, the working medium flows through the fourth sub-region 2622 and the second partition region 272 from the first terminal 221. When the heat exchange plate 2 is configured to heat the battery, the working medium flows through the second partition region 272 and the fourth sub-region 2622 from the second terminal. In this way, when cooling the battery, the low-temperature working medium flows from the fourth sub-region 2622 corresponding to the high-temperature region of the battery to the second partition region 272 corresponding to the low-temperature region of the battery. When heating the battery, the high-temperature working medium flows from the second partition region 272 corresponding to the low-temperature region of the battery to the fourth sub-region 2622 corresponding to the high-temperature region of the battery.

Optionally, referring to FIG. 3, the first-type region 26 includes a fourth sub-region 2622 and a second sub-region 2612.

The second-type region 27 includes a second partition region 272, and the second partition region 272 is located between the fourth sub-region 2622 and the second sub-region 2612.

When the heat exchange plate 2 is configured to cool the battery, the working medium flows into the fourth sub-region 2622, the second partition region 272, and the second sub-region 2612 from the first terminal, flows back to the second partition region 272 and the fourth sub-region 2622 from the second sub-region 2612, and then flows into the second terminal.

When the heat exchange plate 2 is configured to heat the battery, the working medium flows into the fourth sub-region 2622, the second partition region 272, and the second sub-region 2612 from the second terminal, flows back to the second partition region 272 and the fourth sub-region 2622 from the second sub-region 2612, and then flows into the first terminal.

Specifically, the first terminal 221 and the second terminal 222 may be located on a side of the fourth sub-region 2622 away from the second partition region 272. The heat exchange plate 2 is configured to exchange heat for the battery with posts on two sides.

When the heat exchange plate 2 is configured to cool the battery, the working medium flows through the fourth sub-region 2622, the second partition region 272, and the second sub-region 2612 from the first terminal 221. The working medium in the fourth sub-region 2622 and the second sub-region 2612 can quickly cool the region of the battery that generates higher heat, and then the working medium in the second partition region 272 cools the region of the battery that generates lower heat. Finally, the working medium flows back to the second partition region 272 and the fourth sub-region 2622 from the second sub-region 2612 and then flows into the second terminal 222.

When the heat exchange plate 2 is configured to heat the battery, the working medium flows into the fourth sub-region 2622, the second partition region 272, and the second sub-region 2612 from the second terminal, flows back to the second partition region 272 and the fourth sub-region 2622 from the second sub-region 2612, and then flows into the first terminal.

In addition, two first terminals 221 may be arranged, the two first terminals 221 may be respectively located on the fourth sub-region 2622 and the second sub-region 2612, and the second terminal 222 is arranged on the second partition region 272.

Optionally, the heat exchange plate includes a plurality of heat exchange modules, the working medium circles between the plurality of heat exchange modules, and the working medium circles at least once in each of the heat exchange modules.

Specifically, referring to FIG. 5 and FIG. 6, the heat exchange plate 2 includes a first heat exchange module and a second heat exchange module. The first heat exchange module and the second heat exchange module are spaced from each other, and at least a part of the flow channel 21 is curved in each of the first heat exchange module and the second heat exchange module, so that the working medium circles at least once in the first heat exchange module, and the working medium circles at least once in the second heat exchange module.

Specifically, when the heat exchange plate 2 exchanges heat for the battery, the first-type region 26 and the second-type region 27 on the heat exchange plate 2 can correspond to heat generation regions on the battery to ensure the heat exchange effect of the heat exchange plate 2 for the battery. The actual structure of the battery may be composed of one group of battery cores, or may be composed of multiple groups of arranged battery cores. For example, when the heat exchange plate 2 exchanges heat for a battery composed of two groups of battery cores, the heat exchange plate 2 can be divided into a first heat exchange module and a second heat exchange module. The first heat exchange module corresponds to one group of battery cores, and the second heat exchange module corresponds to the other group of battery cores. In addition, at least a part of the flow channel 21 is curved in each of the first heat exchange module and the second heat exchange module, so that an area for arranging the flow channel 21 in the first heat exchange module and the second heat exchange module can be increased. Therefore, this increases the effective heat exchange area of the heat exchange plate 2 and the heat exchange amount of the heat exchange plate 2 for the battery.

In an embodiment, referring to FIG. 5 and FIG. 6, each heat exchange module includes a first-type region 26 and a second-type region 27.

The first-type region 26 includes a third sub-region 2621, a first sub-region 2611, a fourth sub-region 2622, and a second sub-region 2612.

The second-type region 27 includes a first partition region 271 and a second partition region 272.

The first partition region 271 is located between the third sub-region 2621 and the first sub-region 2611, so that the first partition region 271, the third sub-region 2621, and the first sub-region 2611form the first heat exchange module. At the same time, the second partition region 272 is located between the fourth sub-region 2622 and the second sub-region 2612, so that the second partition region 272, the fourth sub-region 2622, and the second sub-region 2612 form the second heat exchange module. Besides, the first sub-region 2611 and the fourth sub-region 2622 are arranged adjacent to each other, so that the first heat exchange module and the second heat exchange module are arranged adjacent to each other, ensuring that the heat exchange plate 2 effectively exchanges heat for the battery composed of multiple groups of battery cores.

In an embodiment, as shown in FIG. 5, the flow channel of 21 includes a first flow converging end and a second flow converging end. The first flow converging end is a connection point where the flow channel 21 converges to the first terminal 221. The second flow converging end is a connection point where the flow channel 21 converges to the second terminal 222.

When the heat exchange plate 2 is configured to cool the battery, the working medium can flow into the heat exchange plate 2 from the first flow converging end. The working medium in the flow channel 21 preferentially flows into the first-type region 26 corresponding to the region of the battery with a higher temperature, thereby cooling the high-temperature region of the battery, and then flows into the second-type region 27. Finally, the working medium can flow out from the second flow converging end after converging.

When the heat exchange plate 2 is configured to heat the battery, the working medium can flow into the heat exchange plate from the second flow converging end. The working medium in the flow channel preferentially flows into the second-type region 27 corresponding to the region of the battery with a lower temperature, thereby heating the low-temperature region of the battery, and then flows into the first-type region 26. Finally, the working medium can flow out from the first flow converging end after converging. Prioritizing heating of the position corresponding to the second-type region 27 can better protect the battery and provide a sufficient operating temperature for the battery. Especially, when the battery has a self-heating function, the heat exchange plate can cooperate with the self-heating function to better provide temperature protection for the central region of the electrode core that is difficult to generate heat and prevent an excessively low temperature.

In practical applications, as shown in FIG. 5, the first flow converging end and the second flow converging end are concentrated on the left side of the heat exchange plate 2. When arranging the flow channel 21, due to the panel space limitation, there may be a case in which the flow channel cannot be arranged in the above ideal manner. In the implementation shown in FIG. 5, for the three regions of the fourth sub-region 2622, the second partition region 272, and the second sub-region 2612 located on the right side, the second partition region 272 can be heated preferentially or the fourth sub-region 2622 and the second sub-region 2612 can be cooled preferentially according to the preferential arrangement of the flow channel. In the three regions of the first partition region 271, the third sub-region 2621, and the first sub-region 2611 on the left side near the flow converging end, due to the relative congestion of the flow channel 21, the preferential arrangement may not be implemented. In this regard, the following implementation may be adopted: the flow channel 21 is introduced from the first flow converging end, then is first arranged to the first sub-region 2611 and then extended to the two regions of the first partition region 271 and the third sub-region 2621, and finally returns to the second flow converging end.

Optionally, referring to FIG. 5, in the first heat exchange module, when the heat exchange plate 2 is configured to exchange heat for the battery, the working medium circles in the flow channel of the third sub-region 2621, the first partition region 271, and the first sub-region 2611 at least once.

To improve the efficiency of heat exchange between the working medium and the battery when the working medium flows in the third sub-region 2621, the first partition region 271, and the first sub-region 2611, the flow channel 21 in the third sub-region 2621, the first partition region 271, and the first sub-region 2611 can be arranged as a circular flow channel. For example, when extending in the third sub-region 2621, the first partition region 271, and the first sub-region 2611, the flow channel 21 may change a direction in the third sub-region 2621 and then extend to the first partition region 271, then extend to the third sub-region 2621 from the first partition region 271, and then change a direction. The flow channel 21 bends to form one or multiple circular flow channels after changing a direction multiple times in the third sub-region 2621, the first partition region 271, and the first sub-region 2611, so that the working medium circles once or multiple times in the third sub-region 2621, the first partition region 271, and the first sub-region 2611, thereby improving the heat exchange efficiency of the heat exchange plate 2.

Optionally, in the second heat exchange module, the first terminal 221 may be connected to the fourth sub-region 2622, and the second terminal 222 may be connected to the second partition region 272.

When the heat exchange plate 2 is configured to cool the battery, the working medium flows into the first heat exchange module from the first terminal 221, flows into the fourth sub-region 2622, the second partition region 272, and the second sub-region 2612 through the first heat exchange module, flows into the second partition region 272 from the fourth sub-region 2622 and the second sub-region 2612, and then flows into the second terminal 222.

When the heat exchange plate 2 is configured to heat the battery, the working medium flows into the second partition region 272 from the second terminal 222, flows into the fourth sub-region 2622 and the second sub-region 2612 from the second partition region 272, and then flows into the first terminal 221.

Optionally, the flow channel 21 includes a flow diverging junction 212, the first terminal 221 is arranged on one side of the third sub-region 2621, and a number of flow diverging junctions 212 in the third sub-region 2621 is greater than a number of flow diverging junctions 212 in the first partition region 271.

Specifically, the first terminal 221 is arranged on one side of the third sub-region 2621. When the heat exchange plate 2 is configured to cool the battery, the working medium passes through the first terminal 221 at a low temperature, and then can flow through the third sub-region 2621 and the first partition region 271 in sequence. For example, the working medium passing through the first terminal 221 is in a liquid state. When the number of the flow diverging junctions 212 in the third sub-region 2621 is greater than the number of the flow diverging junctions 212 in the first partition region 271, more flow diverging junctions 212 may be arranged in the third sub-region 2621, that is, in the flow process of the working medium in the third sub-region 2621, the flow diverging junction 212 can increase the flow channels. Besides, the working medium in the liquid state can ensure balanced distribution during diverging, and the temperature evenness of the heat exchange plate 2 during heat exchange can be improved.

It should be noted that when the heat exchange plate 2 is configured to cool the battery, the flow diverging junction 212 is configured to diverge, and when the heat exchange plate 2 is configured to heat the battery, due to the reverse direction of the working medium in the flow channel, the flow diverging junction 212 can be configured to converge.

Optionally, the number of flow diverging junctions 212 in the first-type region 26 is greater than the number of flow diverging junctions 212 in the second-type region 27.

Specifically, when the heat exchange plate 2 is configured to cool the battery, the working medium flows through the first-type region 26 and the second-type region 27 from the first terminal 221 at a low temperature, and flows into the second terminal 222 from the second-type region 27. For example, the working medium is in a liquid state when flowing through the first-type region 26 from the first terminal 221. When the number of the flow diverging junctions 212 in the first-type region 26 is greater than the number of the flow diverging junctions 212 in the second-type region 27, more flow diverging junctions 212 may be arranged in the first-type region 26, that is, in the flow process of the working medium in the first-type region 26, the flow diverging junction 212 can increase the flow channels. Besides, the working medium in the liquid state can ensure balanced distribution during diverging.

In an embodiment, when the heat exchange plate 2 is configured to exchange heat for the battery, the flow channel 21 diverges for the first time in the third sub-region 2621. That is, the flow diverging junction 212 can implement converging or diverging when the working medium flows in the third sub-region 2621. Besides, when the flow diverging junction 212 in the third sub-region 2621 is configured to diverge, the working medium in the liquid state can be diverged by the flow diverging junction 212 to ensure the balanced distribution of the working medium during diverging.

Optionally, when the heat exchange plate 2 is configured to cool the battery, the flow channel diverges once in the third sub-region 2621 and then diverges for the second time and converges for the first time in the first sub-region 2611.

When the heat exchange plate 2 is configured to heat the battery, the flow channel diverges in the first sub-region 2611 and then converges for the first time in the first sub-region 2611, and then converges for the second time in the third sub-region 2621.

Optionally, when the heat exchange plate 2 is configured to cool the battery, the flow channel diverges in the fourth sub-region 2622 and the second sub-region 2612, and then converges in the second partition region 272.

When the heat exchange plate 2 is configured to heat the battery, the flow channel diverges in the second partition region 272 and then converges in the fourth sub-region 2622 and the second sub-region 2612.

As shown in FIG. 5 and FIG. 6, when the heat exchange plate 2 is located in the left region close to the first terminal 221 and the second terminal 222, that is, the first heat exchange module formed by the first partition region 271, the third sub-region 2621, and the first sub-region 2611, if the space of the first heat exchange module is close to the first terminal 221 and the second terminal 222, the flow channel 21 of the first heat exchange module is crowded. Therefore, in this solution, it is preferable to arrange the flow diverging junction in the two regions of the third sub-region 2621 and the first sub-region 2611. These two regions correspond to high-heating regions of the battery. Performing diverging and converging in these regions helps to reduce the rapid and concentrated heat exchange of the working medium in a narrow space, so that the working medium can perform heat exchange in these regions more evenly.

For example, the working medium flowing in from the first flow converging end can concentrate at the corner of the third sub-region 2621 and diverge for the first time, and then diverge for the second time at the upper part of the first sub-region 2611. Then, some flow channels can diverge again at the lower part of the first partition region 271, while other flow channels do not need to diverge. Finally, when the flow channels extend to the lower part of the third sub-region 2621, the flow channels can concentrate and converge and then return to the second flow converging end. Usually, flow converging can be performed once or twice. The above description uses cooling as an example. During heating, the form of diverging and converging is completely opposite.

Optionally, as shown in FIG. 5 and FIG. 6, in the right region away from the first terminal 221 and the second terminal 222, that is, the second heat exchange module formed by the second partition region 272, the fourth sub-region 2622, and the second sub-region 2612, the space for flow channel arrangement is relatively large. This solution preferentially evenly distributes flow diverging junctions at the upper and lower ends of the three regions, and a number of times of flow diverging and converging can be correspondingly larger. Using the cooling solution as an example, the flow channel extending from the first flow converging end on the left side to the right side can separately diverge and extend into the fourth sub-region 2622 and the second sub-region 2612. In these two regions, the flow channel can extend straightly and extend longitudinally across the most area of the two regions. Then, the flow channel can turn to the second partition region 272 between the fourth sub-region 2622 and the second sub-region 2612. The flow channel usually extends straightly through the second partition region 272, and finally parallel flow channels converge on the lower side of the second partition region 272. Finally, the flow channel extends to the left to return to the second flow converging end.

In this solution, the flow channel can diverge for two or three times to achieve the layout characteristic of large-area parallel and long-distance extension. Then, the flow channel converges for two to three times to converge to the trunk and returns to the flow converging end. Similarly, in the heating mode, the working medium flows in from the second flow converging end and directly flows to the lower side of the second partition region 272, and diverges for multiple times to form multiple parallel flow paths.

Optionally, referring to FIG. 3, at least a part of the flow channel 21 diverges at least once in a process of extending from the first partition 261 to the first partition region 271, and the flow channel 21 converges at least once in a process of extending from the first partition 261 to the first partition region 271.

In particular, the working medium in this solution can be preferentially selected as a refrigerant working medium that can switch between gas and liquid phases. This type of refrigerant working medium can effectively implement heat exchange through phase state change, and has higher heat exchange efficiency than traditional water cooling, coolant, and other methods. The cooling solution is used as an example. When at least a part of the flow channel 21 diverges at least once in a process of extending from the first partition 261 to the first partition region 271, more flow channels can be arranged in the heat exchange plate, to increase the heat exchange efficiency of the heat exchange plate. When the flow channel converges at least once in a process of extending from the first partition 261 to the first partition region 271, the terminals of the flow channel in the heat exchange plate can be concentrated and the structural compactness of the heat exchange plate can be improved.

In contrast, due to the phase state change of the refrigerant working medium, if the refrigerant working medium is concentrated in a region and undergoes substantial phase change, other regions cannot obtain good heat exchange effect. In this regard, this solution uses flow diverging methods such as diverging one flow channel into two and diverging two flow channels into four as much as possible, as shown in flow diverging methods of regions a, b, c, and d in FIG. 15, to improve the evenness of the working medium flow in the flow channel. Further, this solution uses multiple parallel flow channels with evenly changing lengths as much as possible, to jointly perform heat exchange in the first-type region and the second-type region, to further reduce concentrated phase change of the working medium caused by uneven flow.

Optionally, referring to FIG. 12, the flow channel 21 includes a trunk circulation flow channel 100. The trunk circulation flow channel 100 is distributed on the edge of the heat exchange plate, one end of the trunk circulation flow channel 100 is connected to the first terminal 221, another end of the trunk circulation flow channel 100 is connected to the second terminal 222, and the trunk circulation flow channel 100 diverges at most three times in the first-type region 26.

Specifically, among the flow channels 21 introduced from the first terminal 221, the outermost trunk circulation flow channel 100 basically no longer diverges after diverging once or twice, circles around the outer edge of the heat exchange plate once, and finally converges again in a position close to the second terminal 222. These flow channels are configured to balance the temperature of the working medium at the end of the flow. Especially, when a phase-change refrigerant working medium is used, these flow channels can play a better role. A volume of the working medium after phase change changes greatly, which is prone to problems such as accumulation, poor circulation, and temperature concentration. This problem is more likely to be very severe at the flow converging end. The working medium in the circling outermost flow channel diverges fewer times, so that the working medium in the outermost flow channel has relatively small phase change, and can be configured to balance the temperature and phase state of the working medium in other flow channels at the end of the entire circulation. This ensures the smoothness and evenness of the overall circulation.

Optionally, referring to FIG. 6, the heat exchange plate includes a first region, the first region corresponds to a battery projection region of the battery on the heat exchange plate, and the trunk circulation flow channel 100 is located in the periphery of the battery projection region.

Specifically, the first region may be the battery coverage region shown in FIG. 6. When the trunk circulation flow channel 100 is located in the periphery of the battery projection region, the trunk circulation flow channel can not only exchange heat for the region around the battery, but also ensure heat exchange of the heat exchange plate for the entire battery and improve the heat exchange efficiency of the heat exchange plate.

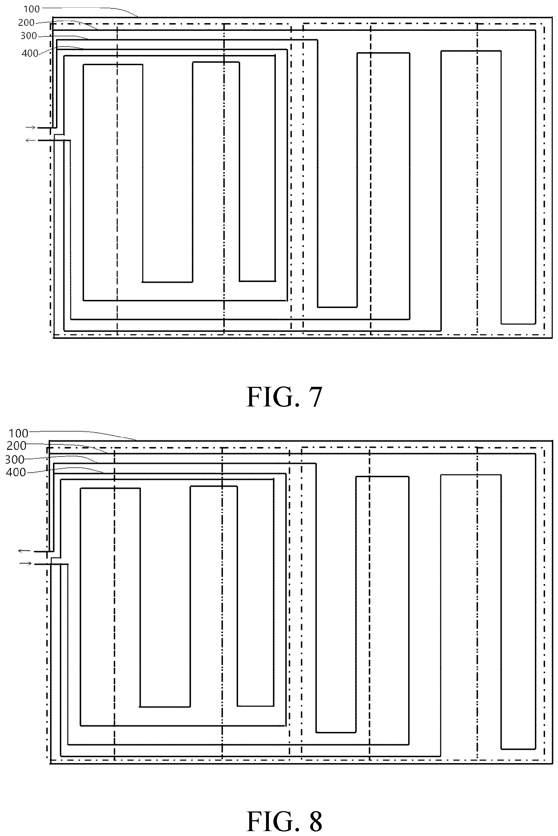

The trunk circulation flow channel 100 can be used as a first circulation flow channel in the heat exchange plate. In the middle of the heat exchange plate, a second circulation flow channel 200, a third circulation flow channel 300, and a fourth circulation flow channel 400 can also be formed, as shown in FIG. 7 and FIG. 8.

Referring to FIG. 9, a direction change junction 211 is formed in a direction change position of the flow channel 21. The direction change junction includes a first-type direction change junction 2111 and a second-type direction change junction 2112. A flow channel direction at one end of the second-type direction change junction 2112 forms a direction change angle with a flow channel direction at another end of the first-type direction change junction 2111. The flow channel 21 can bend by a direction change angle when passing through the second-type direction change junction 2112, for example, bend by 90° or 180°, to achieve flexible direction change of the flow channel 21 and ensure the distribution density of the flow channel 21 in the heat exchange plate.

Referring to FIG. 10, the flow diverging junction 212 includes a first-stage flow diverging junction 2121 and a second-stage flow diverging junction 2122. The branch includes a first-stage branch. The first-stage flow diverging junction 2121 is connected between the trunk and the first-stage branch. The branch includes a second-stage branch. The second-stage flow diverging junction 2122 is connected between the first-stage branch and the second-stage branch.

Optionally, the heat exchange plate includes:
a flow channel 21, the flow channel being arranged in the heat exchange plate, and the flow channel being configured to allow a heat exchange working medium to flow therein; and
a first terminal 221 and a second terminal 222, one end of the flow channel being connected to the first terminal 221, another end of the flow channel being connected to the second terminal 222, and the first terminal 221 and the second terminal 222 being configured to allow the heat exchange working medium to flow into the heat exchange plate.

The heat exchange plate includes a first-type region 26, and the first-type region 26 is arranged in correspondence with a post region of the battery. The flow channel includes a flow diverging junction 212, the flow diverging junction includes a first-stage flow diverging junction 2121, at least one first-stage flow diverging junction is arranged in the first-type region, the first-stage flow diverging junction is arranged close to the first terminal or the second terminal, and the flow diverging junction diverges the flow channel.

Specifically, the first-type region 26 may correspond to a region where a battery core generates higher heat in the battery. Since the battery core needs to be provided with a post for electrical connection, heat generated in a post region of the battery core during operation is higher, thus forming the post region of the battery. The first-type region 26 can be arranged in correspondence with the post region of the battery, and a region on the heat exchange plate other than the first-type region can be arranged in correspondence with a non-post region of the body of the battery core on the battery, to improve the heat exchange efficiency of the heat exchange plate 2.

Specifically, numbers of flow channels at two ends of the flow diverging junction 212 are different. The flow channels at the two ends of the flow diverging junction 212 can be used as inlets and outlets of the working medium respectively, and in different heat exchange cases of the heat exchange plate, the flow channel inlets and outlets at the two ends of the flow diverging junction 212 can be switched to each other, so that the working medium can flow forwards or backwards in the flow diverging junction 212.

In an embodiment, from the first terminal 221 to the second terminal 222, the flow channel has at least two flow diverging junctions 212, one of the flow diverging junctions 212 is close to the first terminal and diverges the flow channel, and another flow diverging junction 212 is close to the second terminal and converges the flow channel.

Specifically, the two ends of the flow channel 21 are plugged or threadedly connected to the first terminal 221 and the second terminal 222 respectively. The flow channel 21 in the heat exchange plate extends from the first terminal 221 to the second terminal 222 after diverging at least once and converging at least once. The flow diverging can be diverging one flow channel into two, diverging one flow channel into three, or diverging one flow channel into more, and the flow converging can be converging two flow channels into one, converging three flow channels into one, or converging more flow channels into one, so as to form one or more flow diverging junctions 212 on the flow channel 21.

In the present disclosure, the flow channel includes a flow diverging junction 212, the flow diverging junction includes a first-stage flow diverging junction 2121, at least one first-stage flow diverging junction is arranged in the first-type region, the first-stage flow diverging junction is arranged close to the first terminal or the second terminal, and the flow diverging junction diverges the flow channel. The first-type region is a region corresponding to a post region where a battery core generates higher heat in the battery. Therefore, the first-stage flow diverging junction can change the number of flow channels to increase the distribution density of the flow channels in the first-type region, thereby improving the heat exchange effect of the heat exchange plate.

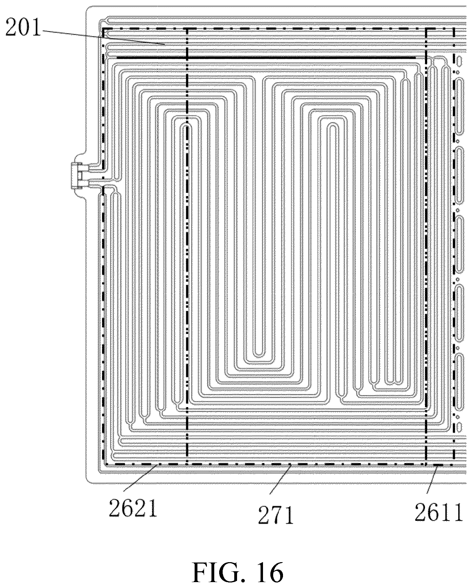

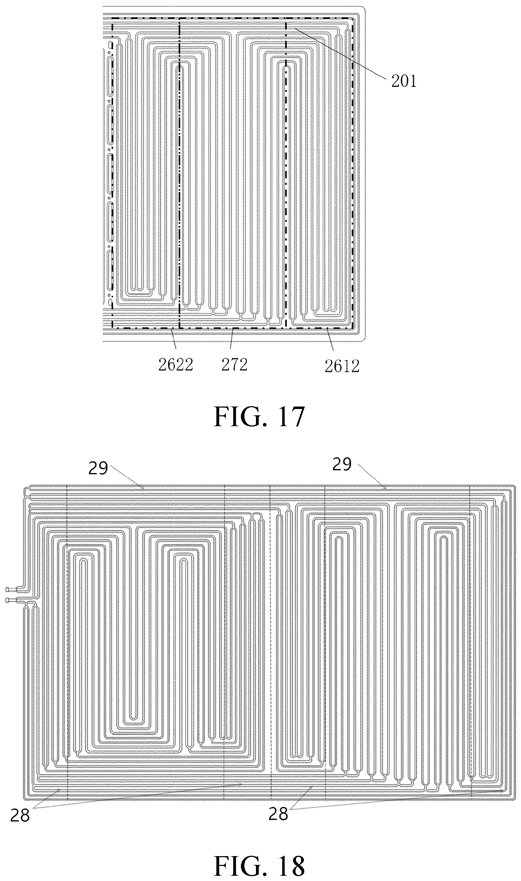

Optionally, referring to FIG. 16 and FIG. 17, the heat exchange plate includes a first heat exchange module 201 and a second heat exchange module 202, and both the first heat exchange module 201 and the second heat exchange module 202 include the first-type region 26.

The first-type region 26 of the first heat exchange module includes a third sub-region 2621 and a first sub-region 2611, and the first-type region 26 of the second heat exchange module includes a fourth sub-region 2622 and a second sub-region 2612.

The first-stage flow diverging junction is arranged in the third sub-region 2621, the flow diverging junction further includes a second-stage flow diverging junction 2122, and the second-stage flow diverging junction is located in at least one of the first sub-region 2611, the second sub-region, and the fourth sub-region.

Specifically, when the heat exchange plate 2 exchanges heat for the battery, the first-type region 26 on the heat exchange plate 2 can correspond to a post region of the battery to ensure the heat exchange effect of the heat exchange plate 2 for the battery. The actual structure of the battery may be composed of one group of battery cores, or may be composed of multiple groups of arranged battery cores. For example, referring to FIG. 6, when the heat exchange plate 2 exchanges heat for a battery composed of two groups of battery cores, the heat exchange plate 2 can be divided into a first heat exchange module and a second heat exchange module. The first heat exchange module corresponds to one group of battery cores, and the second heat exchange module corresponds to the other group of battery cores. In addition, at least a part of the flow channel 21 is curved in each of the first heat exchange module and the second heat exchange module, so that an area for arranging the flow channel 21 in the first heat exchange module and the second heat exchange module can be increased. Therefore, this increases the effective heat exchange area of the heat exchange plate 2 and the heat exchange amount of the heat exchange plate 2 for the battery.

Specifically, the first heat exchange module may be the left region in FIG. 5, and the second heat exchange module may be the right region in FIG. 5. The first-type region 26 of the first heat exchange module includes the third sub-region 2621 and the first sub-region 2611, and the first-type region 26 of the second heat exchange module includes the fourth sub-region 2622 and the second sub-region 2612. The first terminal 221 and the second terminal 222 may be arranged close to the third sub-region 2621. The first-stage flow diverging junction is a flow diverging junction close to the first terminal 221 and the second terminal 222 in the flow channel, so that the first-stage flow diverging junction is arranged in the third sub-region 2621.

Optionally, the heat exchange plate includes:
a heat exchange region and a battery region, the heat exchange region being arranged around the battery region, and the battery region being a battery projection region of a battery on the heat exchange plate; and
a flow channel 21, the flow channel 21 being arranged in the heat exchange plate, the flow channel being configured to allow a heat exchange working medium to flow therein, and the flow channel including a first-type flow channel and a second-type flow channel.

The first-type flow channel is located in the heat exchange region, and the second-type flow channel is distributed in the battery region.

Specifically, when the flow channel 21 extends in the heat exchange plate, outermost first-type flow channels basically no longer diverge after diverging once or twice, circle around the outer edge of the heat exchange plate once, and finally converge again at a position close to a flow channel outlet. These flow channels are configured to balance the temperature of the working medium at the end of the flow. Especially, when a phase-change refrigerant working medium is used, these flow channels can play a better role. A volume of the working medium after phase change changes greatly, which is prone to problems such as accumulation, poor circulation, and temperature concentration. This problem is more likely to be very severe at the flow converging end. The working medium in the circling outermost flow channel diverges fewer times, so that the working medium in the outermost flow channel has relatively small phase change, and can be configured to balance the temperature and phase state of the working medium in other flow channels at the end of the entire circulation. This ensures the smoothness and evenness of the overall circulation.

When the first-type flow channel surrounds the battery region and is located in the periphery of the battery projection region, the first-type flow channel can not only exchange heat for the region around the battery, but also ensure heat exchange of the heat exchange plate for the entire battery and improve the heat exchange efficiency of the heat exchange plate.

The first-type flow channel can be used as a first circulation flow channel in the heat exchange plate. In the middle of the heat exchange plate, a second-type flow channel including a second circulation flow channel, a third circulation flow channel, and a fourth circulation flow channel can also be formed, to improve the heat exchange balance of the heat exchange plate.

Optionally, a length of the first-type flow channel is smaller than a length of the second-type flow channel; and/or
a number of diverging times of the first-type flow channel is less than a number of diverging times of the second-type flow channel.

Specifically, the first-type flow channel is located in the heat exchange region, that is, the first-type flow channel circles around the outer edge of the heat exchange plate, so that the second-type flow channel is located inside the first-type flow channel. However, after the first-type flow channel diverges once or twice, the first-type flow channel basically no longer diverges. Besides, the number of diverging times of the first-type flow channel is small, but the second-type flow channel needs to diverge and change a direction multiple times in the heat exchange plate, so that the flow channel is evenly distributed in the heat exchange plate. Therefore, the length of the first-type flow channel is shorter than the length of the second-type flow channel, and the number of diverging times of the first-type flow channel is less than the number of diverging times of the second-type flow channel, to ensure the balance of flow channel distribution in the heat exchange plate. An embodiment of the present disclosure further provides a battery pack, including the heat exchange plate 2 and multiple battery cores 1. Two ends of each battery core are provided with posts. The multiple battery cores are arranged along a first direction, and the first direction may be an X direction in FIG. 1, to increase the energy density of the battery pack. The heat exchange plate is arranged on one or two sides of the battery core 1 along a second direction. The second direction may be a Z direction in FIG. 1. Side faces of the multiple battery cores along the second direction form a large surface of the battery cores. The heat exchange plate is arranged close to one or two large surfaces of the battery core, which can ensure the heat exchange effect of the heat exchange plate for the battery core.

In addition, the multiple battery cores 1 may form a first battery module 11 and a second battery module 12. The second battery module 12 is located on a side of the first battery module 11 away from the inlet and outlet assembly 22. Specifically, the flow channel of the first-type region 26 may be opposite to the first battery module 11 and may be close to the inlet and outlet assembly 22, that is, the flow channel of the first-type region 26 is located at a near end of the heat exchange plate. The flow channel 21 of the second-type region 27 can be away from the inlet and outlet assembly 22, that is, the flow channel of the second-type region 27 is located at a far end of the heat exchange plate. To ensure the balanced heat exchange effect of the near end and the far end of the heat exchange plate, a flow amount of the flow channel 21 at the far end can be increased, for example, a flow amount of a channel in the flow channel 21 opposite to the second battery module 12 is set to a second flow amount, and a first flow amount is smaller than the second flow amount.

Optionally, a direction in which posts at the two ends of the battery core 1 are connected is a third direction. The third direction can be a Y direction in FIG. 1. The first direction, the second direction, and the third direction may be parallel to a width direction, a height direction, and a length direction of the battery core respectively. When the first direction, the second direction, and the third direction are perpendicular to each other, the multiple battery cores can form a compact battery pack structure to ensure the energy density of the battery pack.

Optionally, the heat exchange plate is a bottom plate or an upper cover. Specifically, the heat exchange plate can be arranged on one side or two sides of the battery core along the second direction. When the heat exchange plate can be arranged on one side of the battery core along the second direction, for example, when the heat exchange plate is arranged on the bottom side of the multiple battery cores, the heat exchange plate can form the bottom plate of the battery pack. On the one hand, it can ensure the heat exchange effect for the battery core when the heat exchange plate is in contact with the battery core. On the other hand, the battery pack can be well protected when the bottom of the battery pack is impacted. When the heat exchange plate is arranged on the top side of the multiple battery cores, the heat exchange plate can form the upper cover of the battery pack. Similarly, it can ensure the heat exchange effect for the battery core when the heat exchange plate is in contact with the battery core. On the other hand, the battery pack can be protected.

An embodiment of the present disclosure provides a vehicle, including the heat exchange plate, or
including the battery pack.

According to a third aspect, with reference to FIG. 3 to FIG. 18, embodiments of the present disclosure provide a flow channel integrated plate, referring to FIG. 18, including:
a first region 28 and a second region 29; and
a flow channel 21, the flow channel being distributed in the first region 28 and the second region 29, and average distribution density of the flow channel 21 in the first region 28 is greater than average distribution density of the flow channel 21 in the second region 29.

Specifically, the flow channel integrated plate can be configured to cool or heat a battery. For example, when the flow channel integrated plate cools the battery, a large amount of heat is generated at a positive electrode position and a negative electrode position during the operation of the battery. That is, the flow channel integrated plate needs to provide better cooling effect on the positive electrode position and the negative electrode position of the battery. When average distribution density of the flow channel 21 in the first region 28 is greater than average distribution density of the flow channel 21 in the second region 29, the first region 28 may face the positive electrode position and the negative electrode position of the battery, and the second region 29 may face the middle of the battery to improve the heat exchange effect of the flow channel integrated plate for the battery.

Optionally, a width of the flow channel 21 is less than 15mm.

Specifically, when the flow channel integrated plate provided by the embodiments of the present disclosure faces different heat exchange requirements in different positions, the heat exchange efficiency of the flow channel integrated plate can be improved through different distribution density of the flow channel 21, that is, the flow channel 21 with a smaller width may be used for heat exchange. The width of the flow channel 21 can be 3mm to 12mm. The width of the flow channel 21 is also a radial size of the flow channel 21. Optionally, to increase the distribution density of the flow channels 21, the width of the flow channel 21 can be set to 5mm to 10mm.

Optionally, the flow channel integrated plate further includes the heat exchange plate 2.

According to a fourth aspect, with reference to FIG. 3 to FIG. 19, embodiments of the present disclosure provide a flow channel integrated plate, including:
a flow channel plate 24; and
a flow channel 21, the flow channel 21 being arranged on the flow channel plate 24, and in a plane where the flow channel integrated plate is located, an area for arranging the flow channel 21 is larger than 70% of an area of the flow channel plate 24.

Specifically, a ratio of the area for arranging the flow channel 21 in the flow channel plate 24 can be flexibly set according to a heat exchange object of the flow channel integrated plate. For example, when exchanging heat for a heat exchange object such as a battery with a high heat exchange requirement, for batteries with different powers and voltages, the area for arranging the flow channel 21 can be set to 75%, 80%, 85%, 90%, or 95% of the area of the flow channel plate 24, to improve the heat exchange flexibility of the flow channel integrated plate.

Optionally, a width of the flow channel is less than 15mm.

Specifically, when the flow channel integrated plate provided by the embodiments of the present disclosure faces different heat exchange requirements in different positions, the heat exchange efficiency of the flow channel integrated plate can be improved through different distribution density of the flow channel, that is, the flow channel 21 with a smaller width may be used for heat exchange. The width of the flow channel 21 can be 3mm to 12mm. The width of the flow channel 21 is also a radial size of the flow channel 21. Optionally, to increase the distribution density of the flow channels 21, the width of the flow channel 21 can be set to 5mm to 10mm.

Optionally, the flow channel integrated plate further includes the heat exchange plate 2.

In addition, the flow channel 21 may be stamped in the heat exchange plate 2, and the battery module 1 may include multiple cells. The heat exchange plate 2 cools the battery module 1 in a forward direction (a flow direction of the working medium in the flow channel 21) and heats the battery module in a reverse direction (a flow direction of the working medium in the flow channel 21), which can improve cooling and heating operations of the battery module 1, ensure the temperature evenness of the battery module 1, and improve the heat exchange capability of the heat exchange plate 2 for the battery module 1.

The flow channel 21 extends from the flow converging end to the inside of the flow channel plate 24. The flow channel 21 is diverged by a flow diverging/converging junction to form more stages of branches. These flow channels 21 are also arranged in turns through a direction change junction, so that the branches cover the entire flow channel plate 24 to achieve heat exchange in each region.

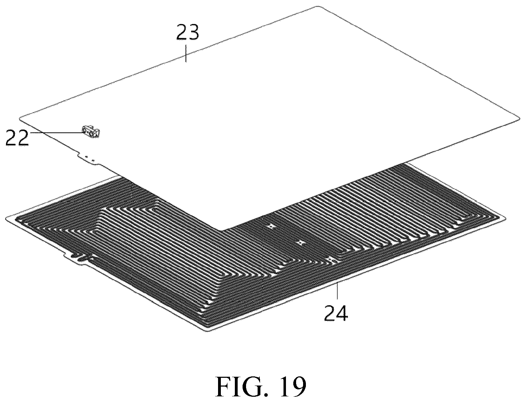

As shown in FIG. 19, the flow channel plate 24 and the base plate 23 are combined to form the heat exchange plate 2. On the flow channel plate 24, the flow channel 21 may have a groove structure and have a top surface that is not sealed. After the base plate 23 covers the flow channel plate 24, the base plate 23 can form top surface seal on the flow channel 21. In this way, the base plate 23 and the flow channel 21 form the heat exchange plate 2 as a whole. The first terminal 221 and the second terminal 222 may be formed by combining terminal components provided on the base plate 23 and the flow channel plate 24. The terminal component is provided with the first terminal 221 and the second terminal 222. After the base plate 23 covers the flow channel plate 24, a first flow converging end and a second flow converging end of the flow channel 21 can be connected to the first terminal 221 and the second terminal 222.

According to the design ideas of each feature of the heat exchange plate 2 in this solution, this solution can be divided into different sections. Different sections represent different technical features that this solution focuses on. The flow channel 21 is designed based on the technical features that are focused on, to obtain a more uniform heat exchange solution.

Although some specific embodiments of the present disclosure have been described in detail through examples, persons skilled in the art shall understand that the above examples are for illustration only and are not intended to limit the scope of the present disclosure. Persons skilled in the art shall understand that the above embodiments can be modified without departing from the scope and spirit of the present disclosure. The scope of the present disclosure is subject only to the appended claims.

## Claims

1. A heat exchange plate, applied to a battery, comprising: a first terminal (221), a second terminal (222), and a flow channel (21) connecting the first terminal (221) to the second terminal (222);
the heat exchange plate (2) being configured to exchange heat for the battery, and the flow channel being configured to allow a working medium to flow;
when the heat exchange plate (2) is configured to cool the battery, the working medium flowing into the flow channel (21) from the first terminal (221) and flowing out from the second terminal (222); and
when the heat exchange plate (2) is configured to heat the battery, the working medium flowing into the flow channel (21) from the second terminal (222) and flowing out from the first terminal (221).

2. The heat exchange plate according to claim 1, wherein when the heat exchange plate (2) is configured to cool the battery, the working medium flows in from the first terminal (221) and preferentially flows through a first-type region; and
when the heat exchange plate (2) is configured to heat the battery, the working medium flows in from the second terminal (222) and preferentially flows through a second-type region;
wherein the first-type region (26) is arranged in correspondence with a post region of the battery, and the second-type region (27) is arranged in correspondence with a non-post region of the battery.

3. The heat exchange plate according to claim 2, wherein the flow channel comprises a first section of flow channel connected to the first terminal (221) and a second section of flow channel connected to the second terminal (222);
when the heat exchange plate (2) is configured to cool the battery, the working medium flows in from the first terminal (221), flows through the first section of flow channel and the second section of flow channel successively, and then flows out from the second terminal, in the first section of flow channel, a length of the flow channel flowing through the first-type region is greater than a length of the flow channel flowing through the second-type region, and in the second section of flow channel, the length of the flow channel flowing through the first-type region is less than the length of the flow channel flowing through the second-type region; and
when the heat exchange plate (2) is configured to heat the battery, the working medium flows in from the second terminal (222), flows through the second section of flow channel and the first section of flow channel successively, and then flows out from the first terminal (221), in the second section of flow channel, a length of the flow channel flowing through the first-type region is less than a length of the flow channel flowing through the second-type region, and in the first section of flow channel, the length of the flow channel flowing through the first-type region is greater than the length of the flow channel flowing through the second-type region.

4. The heat exchange plate according to claim 3, wherein a ratio of a length of the first section of flow channel to a length of the second section of flow channel ranges from 0.5 to 5.

5. The heat exchange plate according to any one of claims 1 to 4, wherein a ratio of a width of the second-type region to a width of the first-type region ranges from 1 to 8.

6. The heat exchange plate according to any one of claims 1 to 5, wherein
a ratio of the width of the first-type region to a length of the battery ranges from 0.1 to 0.4, and a ratio of the width of the second-type region to the length of the battery ranges from 0.1 to 0.6.

7. The heat exchange plate according to any one of claims 1 to 6, wherein the first terminal (221) and the second terminal (222) are located on a same side of the heat exchange plate.

8. The heat exchange plate according to claim 7, comprising an inlet and outlet assembly (22), the first terminal (221) and the second terminal (222) being located in the inlet and outlet assembly (22).

9. The heat exchange plate according to any one of claims 3 to 8, comprising the first-type region (26) and the second-type region (27), the flow channel being distributed in the first-type region (26) and the second-type region (27);
the first-type region (26) comprising a first partition (261) and a second partition (262);
the second-type region (27) comprising a first partition region (271), and the first partition region (271) being located between the first partition (261) and the second partition (262);
when the heat exchange plate (2) is configured to exchange heat for the battery, the working medium circling in the first partition (261), the first partition region (271), and the second partition (262) at least once; and
the first-type region (26) being arranged in correspondence with a post region of the battery, and the second-type region (27) being arranged in correspondence with a non-post region of the battery.

10. The heat exchange plate according to any one of claims 3 to 8, wherein the first-type region (26) comprises a fourth sub-region (2622), and the second-type region (27) comprises a second partition region (272);
when the heat exchange plate (2) is configured to cool the battery, the working medium flows through the fourth sub-region (2622), the second partition region (272), and the fourth sub-region (2622) from the first terminal (221), and flows into the second terminal (222) from the fourth sub-region (2622); and
when the heat exchange plate (2) is configured to heat the battery, the working medium flows through the fourth sub-region (2622), the second partition region (272), and the fourth sub-region (2622) from the second terminal (222), and flows into the first terminal (221) from the fourth sub-region (2622).

11. The heat exchange plate according to any one of claims 3 to 8, wherein the first-type region (26) comprises a fourth sub-region (2622) and a second sub-region (2612);
the second-type region (27) comprises a second partition region (272), and the second partition region (272) is located between the fourth sub-region (2622) and the second sub-region (2612);
when the heat exchange plate (2) is configured to cool the battery, the working medium flows into the fourth sub-region (2622), the second partition region (272), and the second sub-region (2612) from the first terminal (221), flows back to the second partition region (272) and the fourth sub-region (2622) from the second sub-region (2612), and then flows into the second terminal (222); and
when the heat exchange plate (2) is configured to heat the battery, the working medium flows into the fourth sub-region (2622), the second partition region (272), and the second sub-region (2612) from the second terminal (222), flows back to the second partition region (272) and the fourth sub-region (2622) from the second sub-region (2612), and then flows into the first terminal (221).

12. The heat exchange plate according to any one of claims 3 to 8, comprising a first heat exchange module and a second heat exchange module, both the first heat exchange module and the second heat exchange module comprising the first-type region (26) and the second-type region (27);
the first-type region (26) comprising a third sub-region (2621), a first sub-region (2611), a fourth sub-region (2622), and a second sub-region (2612);
the second-type region (27) comprising a first partition region (271) and a second partition region (272); and
the first partition region (271) being located between the third sub-region (2621) and the first sub-region (2611), the second partition region (272) being located between the fourth sub-region (2622) and the second sub-region (2612), and the first sub-region (2611) and the fourth sub-region (2622) being arranged adjacent to each other.

13. The heat exchange plate according to claim 12, wherein in the first heat exchange module, when the heat exchange plate (2) is configured to exchange heat for the battery, the working medium circles in the flow channel of the third sub-region (2621), the first partition region (271), and the first sub-region (2611) at least once.

14. The heat exchange plate according to claim 12 or 13, wherein in the second heat exchange module,
when the heat exchange plate (2) is configured to cool the battery, the working medium flows into the first heat exchange module from the first terminal (221), flows into the fourth sub-region (2622) and the second sub-region (2612) from the first heat exchange module, flows into the second partition region (272) from the fourth sub-region (2622) and the second sub-region (2612), and then flows into the second terminal (222); and
when the heat exchange plate (2) is configured to heat the battery, the working medium flows into the second partition region (272) from the second terminal (222), flows into the fourth sub-region (2622) and the second sub-region (2612) from the second partition region (272), and then flows into the first terminal (221).

15. The heat exchange plate according to any one of claims 3 to 14, wherein the flow channel comprises a flow diverging junction (212), the flow diverging junction comprises a first-stage flow diverging junction (2121), at least one first-stage flow diverging junction is arranged in the first-type region, the first-stage flow diverging junction is arranged close to the first terminal or the second terminal, and the flow diverging junction diverges the flow channel.

16. The heat exchange plate according to claim 15, comprising a first heat exchange module and a second heat exchange module, both the first heat exchange module and the second heat exchange module comprising the first-type region (26);
the first-type region (26) of the first heat exchange module comprising a third sub-region (2621) and a first sub-region (2611), and the first-type region (26) of the second heat exchange module comprising a fourth sub-region (2622) and a second sub-region (2612); and
the first-stage flow diverging junction being arranged in the third sub-region (2621), the flow diverging junction further comprising a second-stage flow diverging junction (2122), and the second-stage flow diverging junction being located in at least one of the first sub-region (2611), the second sub-region, and the fourth sub-region.

17. The heat exchange plate according to any one of claims 3 to 16, comprising: a heat exchange region and a battery region, the heat exchange region being arranged around the battery region, the battery region being a battery projection region of a battery on the heat exchange plate, and the flow channel comprising a first-type flow channel and a second-type flow channel; the first-type flow channel being located in the heat exchange region, and the second-type flow channel being distributed in the battery region.

18. The heat exchange plate according to claim 17, wherein a length of the first-type flow channel is less than a length of the second-type flow channel, and/or a number of diverging times of the first-type flow channel is less than a number of diverging times of the second-type flow channel.

19. A battery pack, comprising the heat exchange plate (2) according to any one of claims 1 to 18.

20. A vehicle, comprising the heat exchange plate according to any one of claims 1 to 18; or comprising the battery pack according to claim 19.
